# EUROPEAN PATENT APPLICATION

(11) **EP 1 574 123 A1**
(43) Date of publication of application: **14.09.2005**
(21) Application number: 05380044.7
(22) Date of filing: 08.03.2005
(51) Int. Cl.: A01D 46/26

(54) **Olive harvester**

(30) Priority: 09.03.2004 ES 200400578
(71) Applicant: Guillen Pastor, Juan Francisco, Cordoba (ES)
(72) Inventor: Guillen Pastor, Juan Francisco, Cordoba (ES)
(74) Representative: PROPI, S.L.

(57) **Abstract**

An olive harvester formed from a box (1) open at the top and frontally, in the interior of which a grate (2) is removably arranged, tilted and formed by a series of rods which allow the passage of the olive and retain stems and branches, incorporating a rotating roller (4) which a blanket (9) is attached to at one of its edges and which is gathered in by the roller by means of the action of a motor, and a trapdoor (6) for unloading the olives onto a deposit, the harvester being coupled to a power take-off (8) of a tractor vehicle by means of attachment (7).

## Description

### DESCRIPTION OF THE INVENTION

The present invention refers to an olive harvester, and more specifically to a device attached to a tractor vehicle that allows storing the olives which, after they are beat down from the olive tree, fall onto a blanket or cloth spread out under the olive tree, these harvested olives subsequently being unloaded directly onto a trailer or container provided for that purpose through a trapdoor located on the bottom of the collector.

### BACKGROUND OF THE INVENTION

Olive harvesting is an operation entailing a number of problems and drawbacks both from the slowness point of view and the harvest operation itself.

In any case, one of the most traditional ways of carrying out the olive harvest consists of arranging blankets or cloths under the olive trees onto which the olives fall, duly beat down by mechanical or manual means, or by means of any other type.

These blankets or cloths arranged for each olive tree are handled by people who both remove the stems which fall with the olives and load the clean olive into the corresponding trailer or container provided for that purpose.

Each vibrating tractor intended for beating down the olives onto the blankets is followed by a group of 6 to 8 people who control several blankets, generally 12, between 2 and 4 people being required to handle the blanket until loading the olives into the tractor trailer. A time comprised between 10 and 20 minutes is required to collect a blanket full of olives.

As can be seen, manual labor is expensive due to the number of people required in the olive harvest operation, and furthermore the time is also considerable, such that the olive harvest involves a remarkable economic cost for the producer.

### DESCRIPTION OF THE INVENTION

The proposed harvester has been designed to solve the drawbacks previously set forth, based on a simple but highly effective solution since with a minimum number of people, usually two or three, it is possible to harvest the olives of each olive tree in less time than that usually established by means of six to eight people.

More specifically, the harvester object of the invention is formed by a type of box open at the top and frontally, incorporating at its upper edge and close to the rear wall a rotating roller driven by means of a motor which carries out the gathering of the cloth or blanket so that the olives fallen thereon are deposited in the collector after passing through a grate formed by parallel rods suitably spaced so as to retain the stems and small branches falling in during the beating down process, whereupon the olives are clean in the bottom of the harvester, being unloaded in the moment so desired through a trapdoor arranged on the lower portion, and the trapdoor of which is actuated by means of a hydraulic cylinder through which the harvester is completely emptied onto a trailer, container or other deposit provided for that purpose.

Said harvester is handled by a tractor vehicle. Said harvester is coupled on the shovel of the tractor in order to lift, lower, tip, etc., the harvester, with the particularity that once the olives are beat down and have fallen onto the cloth or blanket, the latter is folded as if it were a book, i.e. superimposing the two halves, such that the end portion of the lower half is located inside the harvester, and the edge of the upper half is fixed on the roller arranged at the upper edge and close to the rear portion of said harvester, such that the rotation of this roller implies gathering in the cloth or blanket, and with it the progressive unloading of the olives on this cloth or blanket onto the grate of the harvester, the olives passing through this grate and the stems, branches, etc., remaining in said grate.

Once the entire cloth or blanket has been unloaded onto the harvester, the latter is decoupled and the harvester itself is emptied or unloaded through the trapdoor provided in the lower portion, which is driven by a motor or by any other suitable system.

Just two people for positioning the lower edge of the folded cloth and attaching the upper edge onto the harvester roller are enough to carry out the operation to harvest the fallen olives on a cloth or blanket, furthermore the harvest time ranges between 1 and 2 minutes per olive tree, in contrast with what occurs with the traditional system which, in addition to requiring a time from 10 to 20 minutes, requires six to eight people to carry out the same job or operation.

Finally, manual labor is reduced quite considerably and the harvest is carried out more quickly.

The harvester and the other elements associated thereto and even the cleaning grate may be formed in any suitable material, preferably metal with stiffening welded profiles, not discarding other materials.

### DESCRIPTION OF THE DRAWINGS

To complement the description being made and for the purpose of helping to better understand the features of the invention according to a preferred practical embodiment thereof, a set of drawings is enclosed as an integral part of said description wherein the following has been shown with an illustrative and non-limiting character:
Figure 1 shows a frontal perspective view of the olive harvester object of the invention.

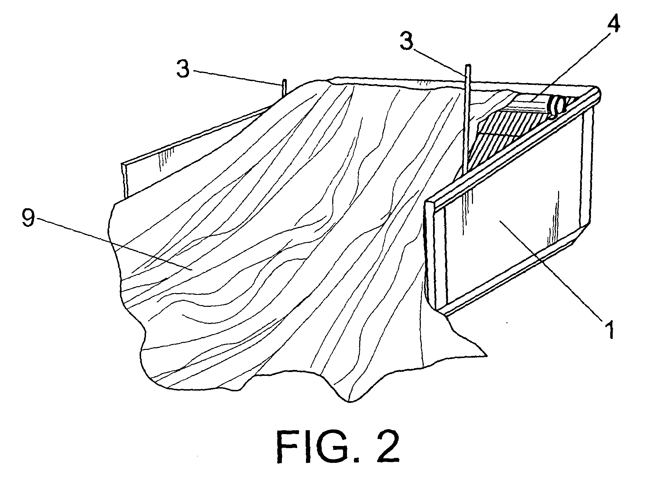

Figure 2 shows a side perspective view of the same harvester shown in the previous figure with the cloth or blanket in the situation of being handled by the roller of said harvester.
Figure 3 shows a perspective view of the harvester shown in the previous figures, driven by a tractor vehicle and with the unloading trapdoor open so as to empty the harvester.
Finally, Figure 4 shows a detail of the articulation or means of attachment between the power take-off of the tractor vehicle and the rear portion of the harvester, the oil distributor for the roller for gathering in the cloth or blanket and of the unloading trapdoor also being seen.

### PREFERRED EMBODIMENT OF THE INVENTION

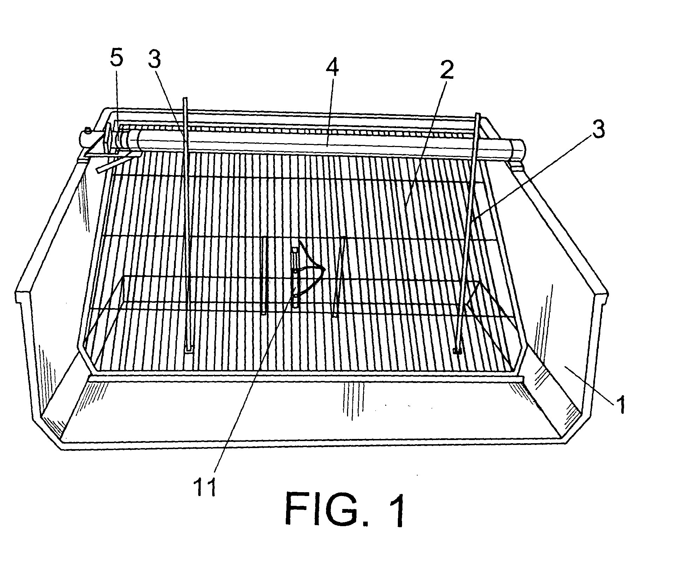

In view of the figures described it can be seen how the harvester of the invention is formed by a type of box (1) open at the top and frontally, and internally incorporating a grate (2), susceptible of being removed and placed at the user's will, being retained in a tilted position by means of a pair of props (3) projecting from the base of the harvester (1), as is clearly shown in Figure 1, in which the grate (2) runs from close to the upper and rear edge of the harvester (1) to an area close to the front and lower edge thereof, this grate (2) being formed by a plurality of rods close and parallel to one another stiffened with transverse rods and all within a perimetral frame.

On the other hand, it has been provided that assembled in correspondence with the upper edge of the box or harvester (1) and arranged close to the rear portion there is a rotating roller (4) supported at its ends in corresponding ball bearings, and a u-joint driveshaft (5) through which rotation is transmitted to the roller (4) from a suitable drive motor.

A trapdoor (6) has been provided in correspondence with the bottom of the harvester (1) which is closed in normal rest position, whereas the corresponding area of the harvester (1) opens during its tipping, achieving the unloading of the olives previously harvested and stored in said harvester (1).

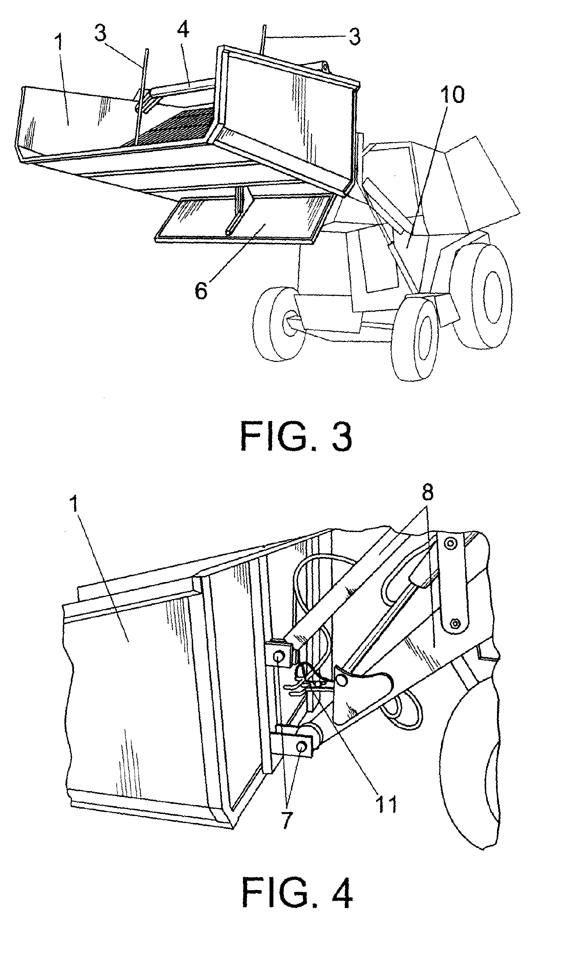

Lugs (7) have been provided in the rear portion for the articulation of the power take-off (8) corresponding to a tractor vehicle (10), the silhouette of which is represented in Figure 3 with dashed lines, such that the harvester (1) is operated or handled through this vehicle with the following operation sequence:

Once the olives have fallen by means of the corresponding vibrating or beating down from the olive tree onto a cloth or blanket (9) spread out on the ground under the olive tree itself, said cloth or blanket (9) is folded as if it were a book, the olives remaining between the lower portion and the upper portion of said folded cloth or blanket. In this situation, the tractor vehicle (10) brings the harvester (1) closer until it is located close to the edge opposite to the fold of the cloth or blanket (9) such that two operators carry out the introduction through the corners or edge of the lower portion of the cloth (9) into the box (1), while the edge of the upper portion of said cloth (9) is located on the roller (4), such that the actuation of the latter and the corresponding rotation imply the winding and gathering in of this upper portion of the cloth (9), the olives arranged between both portions of the cloth (9) therefore falling onto the cleaning grate (2) provided in the container (1), the olives falling through the grate (2) towards the bottom of said container (1) while the branches, stems and other impurities are retained on the grate (2) itself.

In this manner the harvest is carried out quickly and easily and with a minimum number of operators, and once the olives are harvested in the harvester (1), the latter is raised by the tractor vehicle, as represented in Figure 3, and the trapdoor (6) is opened so that the olives are unloaded into a trailer located under the harvester (1), or into any other suitable deposit, container or place.

A hydraulic cylinder (11) for carrying out the opening of the trapdoor (6) can be seen in Figure 1.

It must finally be stated that an oil distributor has been arranged for the harvester roller (4) and for the unloading trapdoor (6) in the area of articulation or attachment between the power take-off (8) of the tractor vehicle and the lower lugs (7) of the harvester (1).

## Claims

1. An olive harvester provided for its coupling to the power take-off (8) of a tractor vehicle (10), **characterized in that** it is formed by a box (1) open at the top and frontally, inside of which a grate (2) is arranged in a removable manner in a tilted arrangement and with a suitable separation of rods so as to allow the passage therethrough of the olives and to retain stems and branches, with the particularity that in correspondence with the upper edge close to the rear portion of the box (1) of the harvester, a rotating roller (4) driven by a motor is provided which gathers in a cloth or blanket (9), previously attached through one of the edges, for emptying the olives, which have fallen onto this cloth or blanket (9) by beating them down, into the box (1) of the harvester, the latter incorporating in its lower portion a trapdoor (6) for emptying or unloading the olives onto a trailer, container or deposit.

2. An olive harvester according to claim 1, **characterized in that** the emptying and unloading trapdoor (6) of the harvester is actuated in its opening by means of a hydraulic cylinder (11).

3. An olive harvester according to claim 1, **characterized in that** in the rear and outer portion of the box (1) forming the harvester, means of attachment (7) to the corresponding power take-off (8) of the tractor vehicle (10) have been provided, as well as an oil distributor for the roller (4) for gathering in the cloth (9) and for the olive unloading trapdoor (6).

4. An olive harvester according to claim 1, **characterized in that** the grate (2) is arranged in a tilted manner inside the box (1), between a point close to the upper edge of the rear portion of said box (1) and an area close to the front and lower edge of said box (1) of the harvester.
